# EUROPÄISCHE PATENTANMELDUNG

(11) **EP 4 368 486 A1**
(43) Veröffentlichungstag der Anmeldung: **15.05.2024**
(21) Anmeldenummer: 23203728.3
(22) Anmeldetag: 16.10.2023
(51) Int. Cl.: B62K 19/34, B62M 6/55

(54) **ANTRIEBSANORDNUNG UND ANTRIEBSEINHEIT FÜR EIN MIT MUSKELKRAFT UND/ODER MIT MOTORKRAFT BETREIBBARES FAHRZEUG, UND FAHRZEUG**

(30) Priorität: 10.11.2022 DE 102022211932
(71) Anmelder: Robert Bosch GmbH, 70442 Stuttgart (DE)
(72) Erfinder: Binder, Julian, 72827 Wannweil (DE); Haeberlein, Johannes, 73266 Bissingen an der Teck (DE)

(57) **Zusammenfassung**

Antriebsanordnung für ein mit Muskelkraft und/oder zusätzlich mit Motorkraft betreibbares Fahrzeug, insbesondere Elektrofahrrad, eBike, Pedelec oder S-Pedelec, zur universellen Anbindung an einem Rahmenbauteil, umfassend eine Antriebseinheit, eine Anzahl erster Befestigungsvorrichtungen an der Antriebseinheit, eine Anzahl zweiter Befestigungsvorrichtungen an dem Rahmenbauteil, wobei die ersten Befestigungsvorrichtungen an der Antriebseinheit und die zweiten Befestigungsvorrichtungen an dem Rahmenbauteil dazu ausgebildet sind, die Antriebseinheit an dem Rahmenbauteil zu befestigen, wobei die Anzahl erster Befestigungsvorrichtungen der Antriebseinheit größer ist als die Anzahl zweiter Befestigungsvorrichtungen des Rahmenbauteils.

## Beschreibung

Die Erfindung betrifft eine Antriebsanordnung für ein mit Muskel und/oder Motor betreibbares Fahrzeug sowie eine Antriebseinheit für ein solches Fahrzeug.

### Stand der Technik

Bekannt sind Antriebsanordnungen für Elektrofahrräder in sogenannter orthogonaler Bauweise. Dabei ist eine Motorachse eines Elektromotors orthogonal zu einer Tretlagerachse angeordnet. Dadurch kann der Elektromotor beispielsweise platzsparend entweder an einem Unterrohr oder in dem Unterrohr eines Fahrzeugrahmens befestigt werden. Üblicherweise werden dabei zusätzlich weitere Komponenten der Antriebsanordnung, wie Getriebe und Elektronik, in einem Gehäuse integriert, welches im Unterrohr befestigt wird. Die Schrift EP 3 750 788 A1 zeigt eine solche Antriebseinheit.

Die Antriebsanordnung kann je nach Hersteller und Rahmentyp in unterschiedlichen Einbaulagen am Rahmen befestigt werden. Gängige Befestigungsvarianten sind die Integration in ein Sitzrohr, die Integration in ein Unterrohr oder eine horizontale Montage. Allen Montagevarianten ist jedoch gemein, dass die Antriebseinheit und ein Rahmenbauteil eine aufeinander abgestimmte Schnittstelle aufweisen müssen. Diese Schnittstelle muss aufwändig ausgelegt und je nach Einbau- und Belastungsfall angepasst werden.

### Offenbarung der Erfindung

Die erfindungsgemäße Antriebsanordnung für ein mit Muskelkraft und/oder mit Motorkraft betreibbares Fahrzeug, insbesondere Elektrofahrrad, eBike, Pedelec oder S-Pedelec mit den Merkmalen des Anspruchs 1 weist demgegenüber den Vorteil auf, dass die Antriebsanordnung eine universelle Schnittstelle aufweist, die dazu geeignet ist, die Antriebseinheit in verschiedenen Einbaupositionen zu befestigen. Dies wird erfindungsgemäß dadurch erreicht, dass die Antriebsanordnung eine Anzahl erster Befestigungsvorrichtungen an der Antriebseinheit und eine Anzahl zweiter Befestigungsvorrichtungen an dem Rahmenbauteil umfasst. Dabei sind die ersten Befestigungsvorrichtungen und die zweiten Befestigungsvorrichtungen dazu ausgebildet, die Antriebseinheit an dem Rahmenbauteil zu befestigen. Dabei ist die Anzahl erster Befestigungsvorrichtungen der Antriebseinheit größer als die Anzahl zweiter Befestigungsvorrichtungen des Rahmenbauteils. Dies bedeutet, dass bei einer Montage der Antriebseinheit an dem Rahmenbauteil eine erste Anzahl erster Befestigungsvorrichtungen mit den zweiten Befestigungsvorrichtungen verbunden ist, während eine zweite Anzahl erster Befestigungsvorrichtungen nicht mit zweiten Befestigungsvorrichtungen verbunden ist. In einem konkreten Ausführungsbeispiel können sechs erste Befestigungsvorrichtungen und drei zweite Befestigungsvorrichtungen vorhanden sein, so dass drei der sechs ersten Befestigungsvorrichtungen dazu dienen, die Antriebseinheit an dem Rahmenbauteil zu befestigen. Die drei übrigen ersten Befestigungsvorrichtungen werden nicht zur Befestigung der Antriebseinheit an dem Rahmenbauteil benötigt. Die bei der Montage der Antriebseinheit an dem Rahmenbauteil freibleibenden ersten Befestigungsvorrichtungen können mit einer anderen Funktion belegt werden. Sie können zum Beispiel für die Befestigung anderer, weiterer Bauteile verwendet werden. Die Antriebseinheit kann so zur Befestigung an unterschiedlichen Rahmenbauteilen verwendet werden. Dabei können zur Befestigung jeweils die gleichen ersten Befestigungsvorrichtungen oder verschiedene erste Befestigungsvorrichtungen verwendet werden. Die mit dem jeweiligen Rahmenbauteil verbundenen ersten Befestigungsvorrichtungen werden im Rahmen der vorliegenden Erfindung auch als aktive erste Befestigungsvorrichtungen bezeichnet, wohingegen die nicht mit dem Rahmenbauteil verbundenen ersten Befestigungsvorrichtungen auch als passive erste Befestigungsvorrichtungen bezeichnet werden. Je nach Rahmenbauteil können unterschiedliche erste Befestigungsvorrichtungen als aktive und passive erste Befestigungsvorrichtungen wirken. So bildet die Befestigungsschnittstelle der Antriebseinheit eine universelle Schnittstelle zur universellen Anbindung der Antriebseinheit an einem Rahmenbauteil.

Bevorzugt ist die Antriebseinheit als Orthogonalantriebseinheit ausgeführt. Das heißt, dass eine Motorwelle der Antriebseinheit insbesondere im Wesentlichen rechtwinklig zu einer Tretwelle der Antriebseinheit angeordnet ist. Orthogonalantriebseinheiten zeichnen sich durch eine besonders kompakte Bauweise aus, die im Wesentlichen innenliegend in einem Rahmenbauteil befestigt werden.

Das Rahmenbauteil bildet zumindest ein Teil des Rahmens des Fahrzeugs, insbesondere ein Teil des Fahrradrahmens. Das Rahmenbauteil umfasst insbesondere zumindest die Befestigungsschnittstelle, an welcher die zweiten Befestigungsvorrichtungen vorgesehen sind. Das Rahmenbauteil kann alternativ oder zusätzlich zumindest ein Rohr des Rahmens umfassen, zum Beispiel das Unterrohr oder das Sitzrohr. Beispielsweise kann das Rahmenbauteil auch eine Kombination verschiedener Rohre sein. Insbesondere kann das Rahmenbauteil eine Kombination aus dem Unterrohr, einem Sitzrohr, einem Steuerrohr, einem Oberrohr und Streben sein.

Das Unterrohr kann in einer ersten Ausführungsform als gerades Rohr von der Befestigungsschnittstelle abgehen. In einer weiteren Ausführungsform kann das Unterrohr beispielsweise einen an der Rahmenschnittstelle abgehenden, im Wesentlichen horizontalen Abschnitt aufweisen, welcher über einen Knick zu dem Steuerrohr des Fahrradrahmens geführt wird.

Mittels der zweiten Befestigungsvorrichtungen an dem Rahmenbauteil ist die Antriebseinheit an dem Rahmenbauteil befestigt. Die zweiten Befestigungsvorrichtungen an dem Rahmenbauteil und die ersten Befestigungsvorrichtungen an der Antriebseinheit stehen dementsprechend in einer Wirkverbindung. Die einander korrespondierenden ersten und zweiten Befestigungsvorrichtungen sind insbesondere als Schraubverbindung ausgebildet. Die ersten Befestigungsvorrichtungen an der Antriebseinheit sind dabei als Schraubverbindungsvorrichtungen ausgebildet. Diese können dabei Bohrungen, insbesondere Gewindebohrungen, Arretierungen oder dergleichen, in der Antriebseinheit sein. Weiterhin können die ersten Befestigungsvorrichtungen auch Befestigungselemente umfassen. Bevorzugt umfassen die ersten Befestigungsvorrichtungen Schrauben, Gewindebolzen oder dergleichen. Die zweiten Befestigungsvorrichtungen an dem Rahmenbauteil sind korrespondierend zu den ersten Befestigungsvorrichtungen ausgebildet, so dass die jeweiligen Befestigungsvorrichtungen an dem Rahmenbauteil und an der Antriebseinheit die Befestigung der Antriebseinheit an dem Rahmenbauteil bewirken. Vorzugsweise sind die zweiten Befestigungsvorrichtungen dementsprechend ebenfalls als Schraubverbindungsvorrichtungen ausgebildet. Korrespondierend zu den ersten Befestigungsvorrichtungen können die zweiten Befestigungsvorrichtungen als Durchgangslöcher in dem Rahmenbauteil ausgebildet sein.

Bevorzugt sind die ersten Befestigungsvorrichtungen auf einer Kreisbahn, insbesondere mit einem Radius von 15 mm bis 50 mm, bevorzugt 20 mm bis 40 mm, besonders bevorzugt 31 mm um eine Tretwelle angeordnet. Mit dieser vorteilhaften Gestaltung lässt sich das Rahmenbauteil besonders schnell auslegen, da sich alle Befestigungspunkte auf demselben Radius befinden und das Rahmenbauteil keine Ausbuchtungen für Flansche oder Aussparungen benötigt. Die ersten Befestigungsvorrichtungen können beispielsweise jede beliebige Position auf der Kreisbahn einnehmen.

Bevorzugt ist eine der ersten Befestigungsvorrichtungen der Antriebseinheit auf einer Befestigungsachse, welche eine Mittelachse eines Unterrohrs oder eine Parallele der Mittelachse eines Unterrohrs des Rahmenbauteils schneidet, angeordnet. In anderen Worten kann eine der ersten Befestigungsvorrichtungen in einer Draufsicht mit der Mittelachse des Unterrohrs zusammenfallen. In einer konkreten Ausführungsform mit einer speziellen Ausprägung des Unterrohrs umfasst das Unterrohr einen horizontalen Abschnitt. Hierbei ist die Mittelachse des Unterrohrs als Mittelachse eines Rohrabschnitts zu verstehen, welcher nicht dem horizontalen Abschnitt zugeordnet ist. Insbesondere beginnt dieser Rohrabschnitt hinter einem Knick, wobei sich der zu berücksichtigende Rohrabschnitt des Unterrohrs in Richtung des Steuerrohrs erstreckt. Durch Parallelverschiebung der Mittelachse kann die Position der einen ersten Befestigungsvorrichtung festgelegt werden.

Weiter bevorzugt sind die ersten Befestigungsvorrichtungen zu gleichen Winkeln um die Tretwelle angeordnet. Besonders bevorzugt sind die ersten Befestigungsvorrichtungen in einem Winkel von 60° um die Tretwelle angeordnet. Es ergibt sich ein besonderer Vorteil aus der Anordnung zu gleichen Winkeln. Bei angepasster Wahl der Anzahl erster Befestigungsvorrichtungen entspricht die Anordnung der Anzahl erster Befestigungsvorrichtungen zu gleichen Winkeln im Wesentlichen den verschiedenen Einbauwinkeln der Antriebseinheit. Besonders vorteilhaft ist, dass ein nahezu gleiches Kraftverhältnis für jede Einbaulage erreicht wird. Beispielsweise ist auch denkbar, dass die Anzahl erster Befestigungsvorrichtungen zu gleichen Winkeln in unterschiedlichen radialen Abständen um die Tretwelle angeordnet ist.

Bevorzugt ist zumindest eine der ersten Befestigungsvorrichtungen auf einer Achse, welche im Wesentlichen parallel zu einer Mittelachse der Antriebseinheit ist und dabei eine Mittelachse der Tretwelle schneidet, angeordnet. Unter einer Mittelachse der Antriebseinheit soll insbesondere eine Achse verstanden werden, welche koaxial oder parallel zu der Motorwelle der Antriebseinheit, insbesondere der Orthogonalantriebseinheit, angeordnet ist. Die Achse, welche im Wesentlichen parallel zu einer Mittelachse der Antriebseinheit und eine Mittelachse der Tretwelle schneidet, soll insbesondere als Achse verstanden werden, welche durch Parallelverschiebung der Mittelachse der Antriebseinheit entlang der Mittelachse der Tretwelle entsteht. Dabei soll die Achse, welche im Wesentlichen parallel zu einer Mittelachse der Antriebseinheit und eine Mittelachse der Tretwelle schneidet, insbesondere mit einer Befestigungsebene einer Abtriebsseite der Antriebseinheit zusammenfallen. Die Befestigungsebene ist insbesondere die Ebene, an der sich die Antriebseinheit und das Rahmenbauteil aneinander abzustützen. Die Mittelachse der Tretwelle soll insbesondere als die Achse verstanden werden, welche im Wesentlichen durch die Mitte der Tretwelle verläuft. Die Tretwelle weist eine im Wesentlichen zylindrische Gestalt auf. Unter der Abtriebsseite soll die Seite einer Antriebseinheit verstanden werden, auf welcher ein unterstützendes Drehmoment des Antriebs an zum Beispiel ein Kettenblatt oder dergleichen abgegeben wird.

Bevorzugt sind die aktiven ersten Befestigungsvorrichtungen, in einem Winkel von im Wesentlichen 120° um die Tretwelle angeordnet. Eine aktive erste Befestigungsvorrichtung ist eine der ersten Befestigungsvorrichtungen, welche im Rahmen der Befestigung der Antriebseinheit am Rahmenbauteil in Verwendung sind. Dahingegen sind passive erste Befestigungsvorrichtungen, erste Befestigungseinrichtungen, welche nicht zur Befestigung der Antriebseinheit an dem jeweiligen Rahmenbauteil verwendet werden.

Bevorzugt weist die Antriebseinheit sechs erste Befestigungsvorrichtungen auf. Die ersten Befestigungsvorrichtungen können dabei auf einer Befestigungsebene der Antriebseinheit, welche sich an dem Rahmenbauteil abstützt, angeordnet sein. Ferner kann eine der Befestigungsebene gegenüberliegende weitere Befestigungsebene die gleiche Anzahl erste Befestigungsvorrichtungen aufweisen. Die ersten Befestigungsvorrichtungen der einen Befestigungsebene können separat zu den ersten Befestigungsvorrichtungen der gegenüberliegenden Befestigungsebene ausgebildet sein. Beispielsweise können sechs Schraubverbindungsvorrichtungen in der einen Befestigungsebene separat von sechs weiteren Schraubverbindungsvorrichtungen in der anderen Befestigungsebene vorgesehen sein, so dass insgesamt zwölf separate Schraubverbindungsvorrichtungen vorhanden sein können. Alternativ können die ersten Befestigungsvorrichtungen in der einen Befestigungsebene auch eine Befestigungseinheit mit den ersten Befestigungsvorrichtungen in der anderen Befestigungsebene bilden. Dies kann zum Beispiel mittels Durchgangsbohrungen erfolgen. Dabei kann die Antriebseinheit sechs Durchgangsbohrungen mit sechs Durchgangsschrauben als erste Befestigungsvorrichtungen aufweisen. Die sechs ersten Befestigungsvorrichtungen bieten zur Montage hinreichend viele Möglichkeiten, sämtliche Einbaulagen abzubilden.

Weiter bevorzugt weist das Rahmenbauteil drei zweite Befestigungsvorrichtungen auf. Dabei können die drei zweiten Befestigungsvorrichtungen Bohrungen, bevorzugt Durchgangsbohrungen, besonders bevorzugt M6-Durchgangsbohrungen, sein.

Besonders bevorzugt ist die Antriebseinheit mit drei aktiven ersten Befestigungsvorrichtungen an drei zweiten Befestigungsvorrichtungen am Rahmenbauteil befestigt. Bevorzugt sind die drei passiven ersten Befestigungsvorrichtungen nicht von dem Rahmenbauteil überdeckt und frei zugänglich.

Bevorzugt sind drei passive erste Befestigungsvorrichtungen der Antriebseinheit dazu vorgesehen, ein Schutzelement, zum Beispiel in Gestalt eines plattenförmigen Schutzelements zu befestigen. Ein Schutzelement ist insbesondere mit einer Schutzfunktion und/oder mit einer Designfunktion versehen. Das Schutzelement lässt sich beispielsweise mit den passiven ersten Befestigungsvorrichtungen derart befestigen, dass es von außen einwirkenden Kräfte, insbesondere ein Aufsetzen des Fahrzeugs auf einem Untergrund abfangen und über das Tretlagermodul an das Rahmenbauteil ableiten kann. Das Schutzelement kann ein umgeformtes Stahlbauteil, insbesondere ein Tiefziehteil, sein. Das Schutzelement kann ferner die Antriebseinheit in dem Rahmenbauteil verbergen. Eine dadurch nahezu geschlossene Oberfläche lässt ein Rahmenbauteil mit Antriebseinheit als einteiliges Bauteil anmuten. Weiterhin kann das Schutzelement vor Witterungseinflüssen schützen. Besonders vorteilhaft ist, dass durch die verbleibenden ersten Befestigungsvorrichtungen, das heißt die passiven ersten Befestigungsvorrichtungen, welche zur Anbindung des Schutzelements genutzt werden, keine weiteren Befestigungsvorrichtungen bereitgestellt werden müssen.

Bevorzugt ist die Befestigung der Antriebseinheit am Rahmenbauteil dazu ausgebildet ist, eine Festlagerseite _{z}u bilden. Die Festlagerseite auf der Abtriebsseite der Antriebseinheit angeordnet. Die Festlageranordnung wird insbesondere dadurch gebildet, dass sich die Antriebseinheit und das Rahmenbauteil an der Befestigungsebene abstützen. Dazu sind die ersten und zweiten Befestigungsvorrichtung derart ausgebildet, dass das Tretlagermodul und das Rahmenbauteil fest miteinander verbunden, vorzugsweise verschraubt, sind. Fest verbunden meint hierbei auch, dass sich das Festlager derart einstellt, dass sich zwischen einer Befestigungsebene des Rahmenbauteils und der Befestigungsebene der Antriebseinheit, im Wesentlichen keine sich verformenden oder toleranzausgleichenden Elemente befinden. Ein besonderer Vorteil ergibt sich hierbei aus der definierten und reproduzierbaren Kettenlinie. Bevorzugt ist auf einer der Abtriebsseite der Antriebseinheit gegenüberliegenden Seite zumindest ein Toleranzausgleichselement angeordnet. Das Rahmenbauteil weist fertigungsbedingt Toleranzen auf, welche durch ein Toleranzausgleichselement ausgeglichen werden. Weiter bevorzugt ist das zumindest eine Toleranzausgleichselement eine aus der Antriebseinheit herausziehbare Hülse. Beispielsweise ist ein Spalt zwischen dem Rahmenbauteil und dem Tretlagermodul mit der Hülse derart überbrückt, dass das Tretlagermodul und das Rahmenbauteil mechanisch zusammengefügt sind. Dabei kann die zumindest eine Hülse zunächst in das Tretlagermodul eingepresst sein.

Bevorzugt ist die Hülse aber derart mechanisch mit dem Tretlagermodul verbunden, dass sie bei einer Zugbelastung aus dem Tretlagermodul austritt und sich am Rahmenbauteil abstützt. Vorzugsweise weist die zumindest eine Hülse eine Bohrung, vorzugsweise eine Gewindebohrung auf. Beispielsweise umfasst die zweite Befestigungsvorrichtung einen Bolzen, bevorzugt einem Gewindebolzen oder eine Schraube. In einer konkreten Ausführungsform erstreckt sich eine Schraube durch eine Bohrung im Rahmenbauteil und ist mechanisch mit dem Innengewinde der Hülse verbunden. Die Bereitstellung einer Hülse ist eine besonders kostengünstige und einfache Möglichkeit für ein Toleranzausgleichselement.

Die Erfindung bezieht sich ferner auf eine Antriebseinheit für ein mit Muskelkraft und/oder mit Motorkraft betreibbares Fahrzeug, insbesondere Elektrofahrrad, eBike, Pedelec oder S-Pedelec, umfassend einen Motor, eine Tretwelle, mehrere Befestigungsvorrichtungen und eine Mittelachse der Antriebseinheit, wobei die Befestigungsvorrichtungen dazu ausgebildet sind, die Antriebseinheit an einem Rahmenbauteil zu befestigen. Dabei befindet sich zumindest eine der Befestigungsvorrichtungen der Antriebseinheit auf der Mittelachse der Antriebseinheit zwischen der Tretwelle und dem Motor der Antriebseinheit. Bevorzugt ist die Antriebseinheit als Orthogonalantriebseinheit ausgeführt. Eine Befestigungsvorrichtung der Antriebseinheit ist dazu eingerichtet, die Antriebseinheit an einem Rahmenbauteil zu befestigen. Die Befestigungsvorrichtungen sind vorzugsweise als Schraubverbindungsvorrichtungen ausgebildet. Diese können dabei Bohrungen, insbesondere Gewindebohrungen, Arretierungen oder dergleichen, in der Antriebseinheit sein. Die Gewindebohrungen können beispielsweise auch über eingepresste Gewindehülsen im Gehäuse der Antriebseinheit eingebracht sein. Weiterhin können die Befestigungsvorrichtungen auch Befestigungselemente umfassen. Bevorzugt umfasst die erste Anzahl Befestigungsvorrichtungen Schrauben, Gewindebolzen oder dergleichen.

Unter einer Mittelachse der Antriebseinheit soll insbesondere eine Achse verstanden werden, welche koaxial oder parallel zu der Motorwelle des Orthogonalantriebs angeordnet ist. Insbesondere soll die Mittelachse durch die zylindrische Gestalt des Orthogonalantriebs, insbesondere des Motors als Mittelachse verstanden werden. Bevorzugt weist die Antriebseinheit einen Motor auf, welcher sich in einem Teil der Antriebseinheit befindet, der der Tretwelle abgewandt ist. Der Motor kann beispielsweise ein Getriebe, den Motor und Steuereinheiten umfassen.

Bevorzugt sind die Befestigungsvorrichtungen auf einer Kreisbahn, insbesondere mit einem Radius von 15 mm bis 50 mm, bevorzugt 20 mm bis 40 mm, besonders bevorzugt 31 mm um eine Tretwelle angeordnet. Für die radiale Anordnung der Befestigungsvorrichtungen bildet die Tretwelle das Zentrum. Mit dieser vorteilhaften Ausgestaltung lassen sich korrespondierende Befestigungsvorrichtungen am Rahmenbauteil einheitlich anordnen, ohne dass zusätzliche Materialausprägungen oder Materialentnahmen am Rahmenbauteil erforderlich sind. Ein weiterer Vorteil der innenliegenden Befestigungsvorrichtungen ergibt sich aus der platzsparenden Anordnung der Befestigungsvorrichtungen, welche nicht über das Gehäuse erhaben erscheinen. Es wird kein zusätzlicher Befestigungsflansch benötigt, was sich besonders vorteilhaft auf das Gewicht und den Bauraum der Antriebseinheit auswirkt. Bevorzugt sind die Befestigungsvorrichtungen zu gleichen Winkeln, bevorzugt in einem Winkel von 60°, um die Tretwelle angeordnet. Dabei können die Befestigungsvorrichtungen in unterschiedlichen radialen Abständen angeordnet sein. Es ergibt sich ein besonderer Vorteil aus der Anordnung zu gleichen Winkeln. Bei angepasster Wahl der Anzahl Befestigungsvorrichtungen entspricht die Anordnung der Befestigungsvorrichtungen zu gleichen Winkeln im Wesentlichen den verschiedenen Einbauwinkeln der Antriebseinheit. Besonders vorteilhaft ist, dass ein nahezu gleiches Kraftverhältnis für jede Einbaulage erreicht wird. Beispielsweise ist auch denkbar, dass die Befestigungsvorrichtungen zu gleichen Winkeln in unterschiedlichen radialen Abständen um die Tretwelle angeordnet sind.

Weiter bevorzugt weist die Antriebseinheit sechs Befestigungsvorrichtungen auf. Sechs Befestigungsvorrichtungen erlauben eine universelle bei gleichzeitig steifer Konstruktion. Die sechs Befestigungsvorrichtungen bieten zur Montage hinreichend viele Möglichkeiten, sämtliche Einbaulagen der Antriebseinheit abzubilden. Ein weiterer Vorteil ergibt sich aus der Bereitstellung zusätzlicher, nicht für die Anbindung an den Fahrradrahmen benötigter Befestigungsvorrichtungen. In einer konkreten Ausführungsform werden drei Befestigungsvorrichtungen zur Anbindung der Antriebseinheit verwendet. Drei weitere Befestigungsvorrichtungen sind dazu vorgesehen zum Beispiel Zubehör, insbesondere ein Schutzelement, aufzunehmen. In einer Ausführungsform können die Befestigungsvorrichtungen konzentrisch um die Tretwelle angeordnet sein.

Die Erfindung betrifft ferner ein Fahrrad insbesondere ein Elektrofahrrad, eBike, Pedelec oder S-Pedelec, welches eine Antriebsanordnung und Antriebseinheit umfasst.

Anhand der Figuren soll die Erfindung näher erläutert werden. Dabei zeigen:
- Figur 1:: eine Seitenansicht einer erfindungsgemäßen Antriebsanordnung in Verbindung mit einem Rahmenbauteil
- Figur 2:: eine schematische Seitenansicht einer erfindungsgemäßen Antriebsanordnung in Verbindung mit einem Rahmenbauteil
- Figur 3:: eine schematische Draufsicht einer erfindungsgemäßen Antriebsanordnung in Verbindung mit einem Rahmenbauteil
- Figur 4:: eine schematische Seitenansicht einer erfindungsgemäßen Antriebsanordnung in Verbindung mit einem Rahmenbauteil
- Figur 5:: Teilansicht eines Rahmenbauteils mit einer im Sitzrohr integrierten Antriebseinheit
- Figur 6: Teilansicht eines Rahmenbauteils mit einer im Sitzrohr integrierten Antriebseinheit
- Figur 7: Teilansicht eines Rahmenbauteils mit einer im Sitzrohr integrierten Antriebseinheit
- Figur 8:: Teilansicht eines Rahmenbauteils mit einem montierten Schutzelement
- Figur 9:: Schematische Ansicht einer erfindungsgemäßen Vorrichtung und Antriebseinheit in Verbindung mit einem Fahrrad

### Ausführungsformen der Erfindung

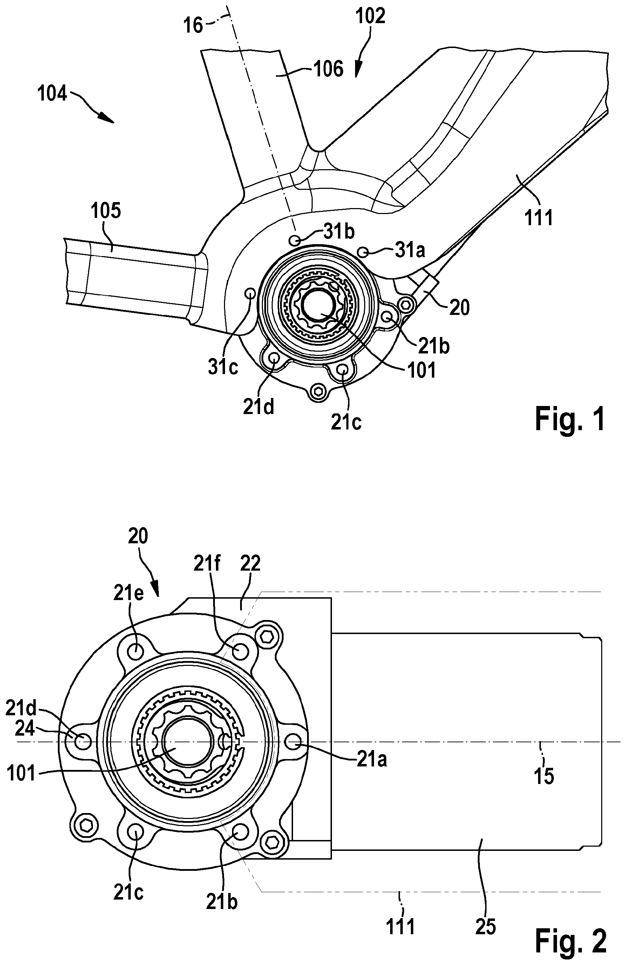

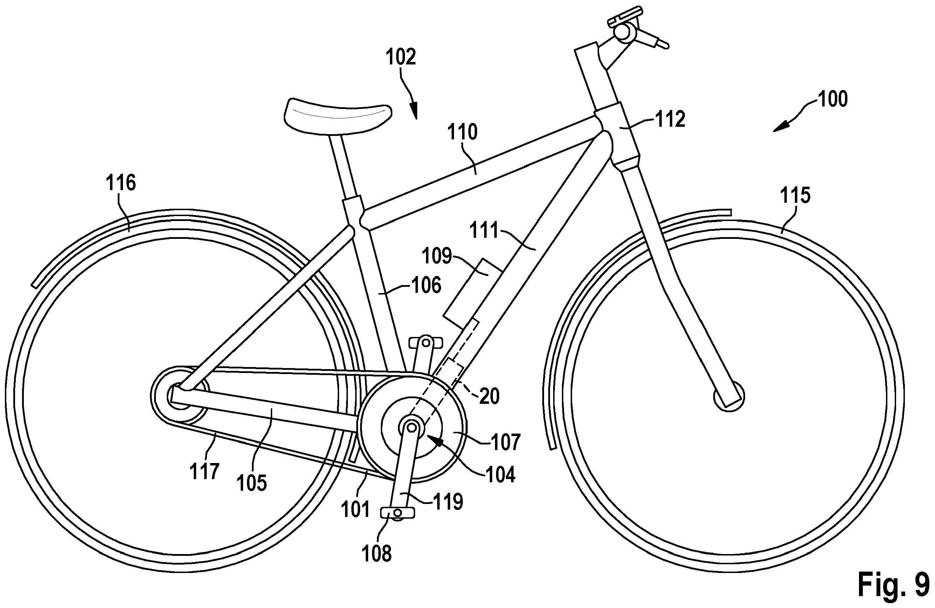

Figur 1 zeigt eine beispielhafte Seitenansicht einer Antriebsanordnung 104 eines mit Muskelkraft und/oder mit Motorkraft betreibbares Fahrzeugs 100, insbesondere Elektrofahrrad, eBike, Pedelec oder S-Pedelec gemäß einer ersten Ausführungsform der vorliegenden Erfindung. In Figur 1 ist dabei ein Teilbereich des Fahrzeugs 100 im Bereich einer Antriebsanordnung 104 dargestellt. Die Antriebsanordnung 104 ist ein integraler Bestandteil des Fahrzeugs 100 (vgl. Fig. 9). Im Detail ist die Antriebsanordnung 104 in einer ersten bevorzugten Ausführungsform zusammengesetzt aus einem Teilbereich eines Unterrohrs 111 des Rahmenbauteils 102 einer Antriebseinheit 20, sechs erster Befestigungsvorrichtungen 21 und drei zweiter Befestigungsvorrichtungen 31, im Einzelnen mit 31a, 31b, 31c bezeichnet.

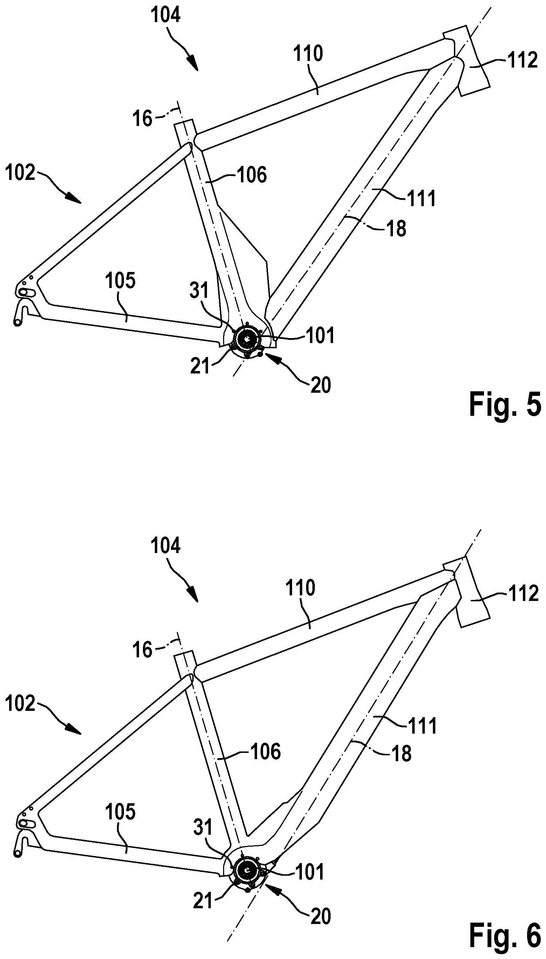

Ein weiterer Bestandteil des Rahmenbauteils 102 ist ein Sitzrohr 106 und eine Kettenstrebe 105, welches ebenfalls ein Bestandteil des Rahmenbauteils 102 ist. Die Antriebseinheit 20 umfasst neben einer Tretwelle 101, sechs Befestigungsvorrichtungen 21, im Einzelnen mit 21a-21f bezeichnet. Drei erste Befestigungsvorrichtungen 21b, 21c, 21d sind nicht in Verwendung stehende erste Befestigungsvorrichtungen 21, sog. passive erste Befestigungsvorrichtungen 21. Drei weitere erste Befestigungsvorrichtungen 21a, 21e, 21f sind mit dem Rahmenbauteil 104 befestigt, sog. aktive erste Befestigungsvorrichtungen 21. Die sechs ersten Befestigungsvorrichtungen 21 umfassen dabei Gewindebohrungen, insbesondere M6 Gewindebohrungen und zugehörige Schrauben. Werden drei aktive Befestigungsvorrichtungen 21 mit drei zweiten Befestigungsvorrichtungen 31a - 31c aneinander befestigt. Die zweiten Befestigungsvorrichtungen 31 umfassen Durchgangsbohrungen der ersten Befestigungsvorrichtungen 21, insbesondere Durchgangsbohrungen für M6-Schrauben. Die Anordnung der zweiten Befestigungsvorrichtungen 31a - 31c orientiert sich in dieser Ausführungsform an dem Sitzrohr 106 des Rahmenbauteils 102. Die mittlere der drei zweiten Befestigungsvorrichtungen 31b orientiert sich dabei an einer Mittelachse 16 des Sitzrohrs 106 oder der Mittelachse 18 des Unterrohrs 111 (dargestellt ab Figur 5). In der in Figur 1 gezeigten Ausführungsform orientiert sich die Befestigungsvorrichtung 31b im Wesentlichen auf einer Mittelachse 16 des Sitzrohrs 106. Daraus ergibt sich eine besonders vorteilhafte Anordnung der zweiten Befestigungsvorrichtungen 31. Die durch eine Pedalkraft auf die Tretwelle 101 eingeleiteten Kräfte können auf kurzem Weg an das Rahmenbauteil 102 abgegeben werden.

Figur 1 zeigt außerdem, dass der Öffnungswinkel zwischen den beiden äußeren zweiten Befestigungsvorrichtungen 31a und 31c beträgt 120°. Dies ermöglicht einen besonders einfachen Einschub der Antriebseinheit 20 in das Unterrohr 106. Ferner ist Figur 1 eine direkte Befestigung des Rahmenbauteils 102 und der Antriebseinheit 20 zu entnehmen. Insbesondere durch eine Direktverschraubung der Antriebseinheit 20 mit dem Rahmenbauteil 102 ergibt sich eine Festlageranordnung 26. Die Festlageranordnung 26 ermöglicht eine reproduzierbare Kettenlinie und somit einen besonders einfachen Aufbau der Antriebsanordnung 104.

Figur 2 bis 4 zeigen schematisch eine Antriebseinheit 20 in Verbindung mit einem Unterrohr 111 in verschiedenen Ansichten.

Figur 2 zeigt eine Seitenansicht auf einer Abtriebsseite der Antriebseinheit 20 in Verbindung mit einem Unterrohr 111. Die Antriebseinheit 20 ist aus zwei Teilen zusammengesetzt. Dabei steht eine Tretlagereinheit 22 in direkter Verbindung mit einem Motor 25. Weiterhin zeigen die Figuren 2 bis 4 schematisch ein Unterrohr 111, in welches der Motor eingeschoben wird. Eine Befestigungsachse 28 einer der ersten Befestigungsvorrichtungen 21, insbesondere der ersten aktiven Befestigungsvorrichtung 21a, schneidet die Mittelachse 18 des Unterrohrs 111 in dieser Ausführungsform. Alle weiteren ersten Befestigungsvorrichtungen 21b - 21f sind auf einer Befestigungsebene 24 der Antriebseinheit 20 angeordnet. Insbesondere zeigt Figur 2 eine Anordnung der ersten Befestigungsvorrichtungen 21 auf einer Kreisbahn, insbesondere in einem Radius von 31mm, um eine Mittelachse der Tretwelle 101 angeordnet. Die Verteilung der ersten Befestigungsvorrichtungen 21 erfolgt in dieser Ausführungsform auf der Kreisbahn zu gleichen Winkeln, hier zu 60°. Die ersten Befestigungsvorrichtungen 21 sind als M6 Gewindebohrung mit entsprechenden Schrauben (nicht dargestellt) ausgeführt. Korrespondierend sind die im Unterrohr 111 eingebrachten drei zweiten Befestigungsvorrichtungen für die M6 Verschraubungen ausgelegt (nicht dargestellt).

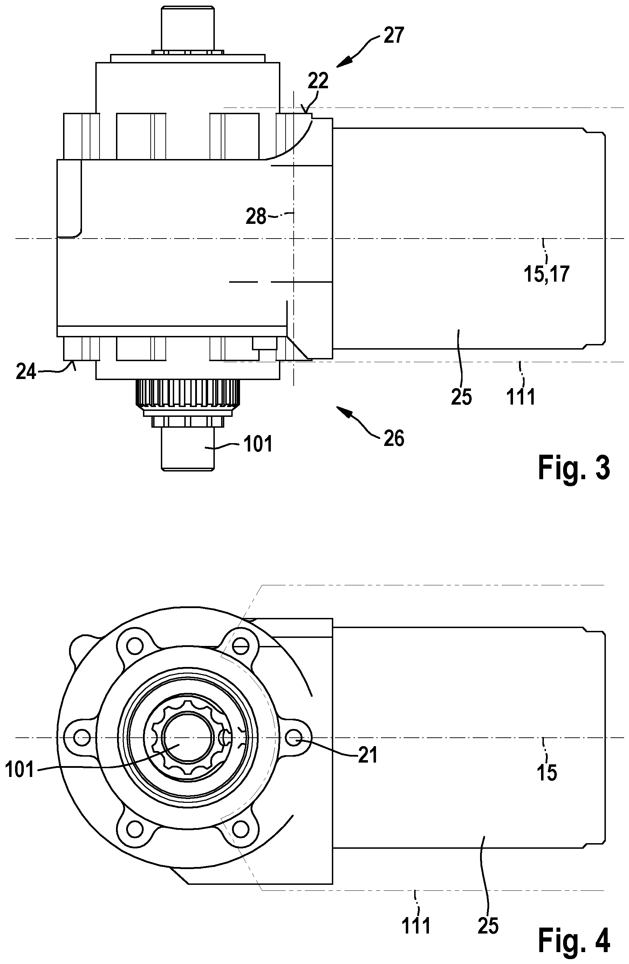

Figur 3 zeigt schematisch die Antriebseinheit 20 in Verbindung mit einem Unterrohr 111 in einer Draufsicht. Insbesondere ist neben der Tretwelle 101 eine Befestigungsebene 24 der Antriebseinheit 20 dargestellt, welche in direktem Kontakt mit dem Unterrohr 111 steht. Die Antriebseinheit 20 ist an dem Rahmenbauteil 102 (nicht dargestellt), insbesondere dem Unterrohr 111 verbunden. Die Verbindung kann kraftschlüssig ausgeführt sein. Weiterhin ist eine Befestigungsachse 28 der Befestigungsvorrichtung 21a und eine Längsachse 15 der Antriebseinheit 20 dargestellt. Weiter zeigt Figur 3 eine Mittelebene der Antriebseinheit 17. Beide Achsen 15, 28 stehen im Wesentlichen rechtwinklig zueinander, bzw. die Befestigungsachse steht im Wesentlichen orthogonal zu der Mittelebene der Antriebseinheit 17. Die Befestigungsachse 28 schneidet die Längsachse 15 der Antriebseinheit 20. Der Schnittpunkt der Achsen 15, 28 wird auf die Befestigungsebene 24 projiziert und ergibt somit die erste Position für die Befestigungsvorrichtung 21a. Es ergeben sich bei einer Anordnung zu gleichen Winkeln, insbesondere zu 60°, alle weiteren Positionen der ersten Befestigungsvorrichtungen 21.

Figur 4 zeigt schematisch eine Rückansicht der Antriebseinheit 20 in Verbindung mit dem Unterrohr 111. Neben dem Motor 25 und dem Tretlagermodul 22 sind weitere erste Befestigungsvorrichtungen 21 dargestellt, welche mit den ersten Befestigungsvorrichtungen 21 in Größe und Position übereinstimmen können.

Die Anordnung der weiteren Befestigungsvorrichtungen 21 befindet sich auf einer der Befestigungsebene 24 abgewandten Seite. In dieser konkreten Ausführungsform sind die Positionen der Befestigungsvorrichtungen 21 an einer Mittelebene der Antriebseinheit 17 (dargestellt in Fig. 3) gespiegelt. Die Befestigungsvorrichtungen 21 ergeben zusammen mit dem Rahmenbauteil 102 eine Loslagerseite 27. Da das Rahmenbauteil 102 fertigungsbedingt toleranzbehaftet ist, muss ein Spalt zwischen Tretlagereinheit 22 und Rahmenbauteil 102 überbrückt werden. Dies kann durch ein Toleranzausgleichselement gelöst sein (nicht dargestellt).

Figur 5 bis 7 zeigen jeweils eine Ausführungsform eines Rahmenbauteils 102 mit einer Antriebsanordnung 104 als Bestandteil eines Fahrzeugs 100. In allen Figuren 5 bis 7 sind eine Kettenstrebe 105, ein Unterrohr 111, ein Oberrohr 110 als Bestandteile des Rahmenbauteils 102 gezeigt. Figur 5 zeigt hierbei insbesondere eine in das Sitzrohr 106 integrierte Antriebseinheit 20. Der Motor 25 der Antriebseinheit 20 ist im Wesentlichen vollständig im Sitzrohr 106 verborgen. Ein aus dem Rahmenbauteil 102 hervorstehender Teil der Antriebseinheit 20 zeigt das Tretlagermodul 22 mit der Tretwelle 101 und drei passive erste Befestigungsvorrichtungen 21. Nicht dargestellt sind die Verschraubungen der aktiven ersten Befestigungselemente 21. Weiterhin sind drei zweite Befestigungsvorrichtungen 31 als Bestandteil des Sitzrohrs 106 dargestellt. Gemäß einer Ausgestaltung der Erfindung erlaubt die Positionierung der zweiten Befestigungsvorrichtungen eine gleichmäßige Einleitung einer vom Fahrer des Fahrzeugs 100 eingeleiteten Kraft. Die Kraft wird über die Tretwelle 101 an die Antriebseinheit weitergegeben. Weiterhin zeigen die Figuren 5 bis die Mittelachse 16 des Sitzrohrs 106 und die Mittelachse 18 des Unterrohrs 111.

Figur 6 zeigt eine weitere bevorzugte Ausführungsform der Antriebsanordnung 104. Hierbei ist die Antriebseinheit 20 jedoch in das Unterrohr 111 integriert. Insbesondere ist dabei im Wesentlichen der Motor 25 im Unterrohr 111 integriert. Die Tretlagereinheit 22 ragt zu großen Teilen aus dem Rahmenbauteil 102 heraus. Besonders vorteilhaft ist hierbei ein großer Öffnungswinkel des Unterrohrs 111, der ein besonders einfachen Einschub der Antriebseinheit 20 insbesondere des Motors 25 erlaubt. Fig. 6 zeigt weiterhin eine Mittelachse 18 des Unterrohrs 111, welche im Wesentlichen zu einer Mittelachse 15 der Antriebseinheit 20 parallel ist. Die Mittelachse 15 der Antriebseinheit 20 ist hierbei nicht koaxial zu der Mittelachse 18 des Unterrohrs 111. Die drei zweiten Befestigungseinrichtungen 31 sind in dieser bevorzugten Ausführungsform an der Mittelachse 16 des Sitzrohrs 106 orientiert, insbesondere die mittlere zweiten Befestigungsvorrichtungen 31. Dabei schneidet eine Befestigungsachse der aktiven Befestigungsvorrichtungen 21, die Mittelachse 16 des Sitzrohrs 106 und ergibt somit die Ausrichtung der drei zweiten Befestigungsvorrichtungen 31. Die zweiten Befestigungsvorrichtungen sind in dieser Ausführungsform zu gleichen Winkeln, insbesondere zu 60° zueinander ausgerichtet

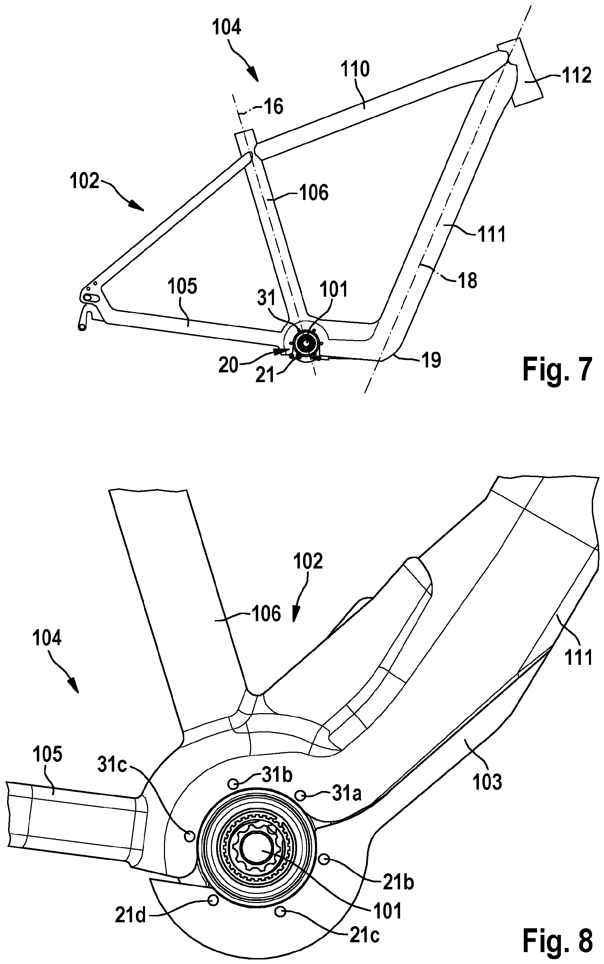

Figur 7 zeigt eine weitere bevorzugte Ausführungsform der Antriebsanordnung 104. Auch bei dieser Ausführungsform ist die Antriebseinheit 20 in das Unterrohr 111 des Rahmenbauteils 102 integriert. Ein wesentlicher Unterschied ist die Ausführungsform des Unterrohrs 111 im Vergleich zu dem Unterrohr 111 aus Figur 6. Das Unterrohr 111 gemäß Fig. 7 weist einen im Wesentlichen horizontalen Teil auf, welcher über einen Knick 19 das Rahmenbauteil 102 in

Richtung eines Steuerrohrs 112 wieder schließt. Der im Wesentlichen horizontale Teil des Unterrohrs 111 nimmt die Antriebseinheit 20 auf und kann nach unten geöffnet sein, um eine einfache Montage der Antriebseinheit 20 zu gewährleisten. Auch in dieser konkreten Ausführungsform ergeben sich die Positionen der vier zweiten Befestigungsvorrichtungen 31 aus den vier aktiven Befestigungsvorrichtungen 21 (hier dargestellt ohne Schrauben). Eine erste Befestigungsvorrichtung 21 der Antriebseinheit 20 orientiert sich im Wesentlichen an einer Mittelachse 16 der Antriebseinheit 20 (vgl. Fig. 2). Durch den Winkel zwischen dem im Wesentlichen horizontalen Teil des Unterrohrs 111 und dem Sitzrohr 106, ergibt sich eine kleine Verdrehung der ersten Befestigungsvorrichtungen 21 gegenüber der Mittelachse 16 des Sitzrohrs 106. Mit anderen Worten ergibt die Verdrehung eine Positionierung der mittleren zweiten Befestigungsvorrichtung 31 außerhalb der Mittelachse 16 des Sitzrohrs 106. Es erfolgt die Ausrichtung der mittleren zweiten Befestigungsvorrichtung 31 an einer Mittelachse 16 des Sitzrohrs 106. Folglich ist mit der bevorzugten Ausführungsform aus Figur 7 ein Kompromiss zwischen der Ausrichtung der zweiten Befestigungsvorrichtungen 31 und der konstanten Ausrichtung der ersten Befestigungsvorrichtungen 21 der Antriebseinheit zu sehen.

Figur 8 zeigt eine Seitenansicht einer weiteren Ausführungsform der Antriebsanordnung 104. Dabei ist insbesondere ein Ausschnitt des Rahmenbauteils 102 mit dem Unterrohr 111, dem Sitzrohr 106 und der Kettenstrebe 105 gezeigt. Weiterhin ist ein Ausschnitt der Antriebseinheit 20 gezeigt, insbesondere ist die Tretwelle 101 der Antriebseinheit 20 gezeigt. Ein Schutzelement 103 ist an den drei passiven ersten Befestigungselementen 21b - 21d montiert. Das Schutzelement lässt sich somit mit einer minimalen Anzahl an Teilen montieren.

Es können die sonst nicht verwendeten passiven ersten Befestigungsvorrichtungen 21b-21d verwendet werden.

Bezugnehmend auf die Figuren 5 und 7 ist eine Montage des Schutzelements 103 an den drei passiven ersten Befestigungsvorrichtungen 21 auch bei einer im Sitzrohr 106 integrierten Antriebseinheit 20, als auch bei einem horizontalen Abschnitt des Unterrohrs 111 vor einem Knick 19, möglich (nicht dargestellt). Dabei können die passiven Befestigungsvorrichtungen 21 in der Auswahl variieren.

Figur 9 zeigt eine vereinfachte schematisch Ansicht eines Fahrrads 100, insbesondere ein Pedelec oder S-Pedelec mit der erfindungsgemäßen Antriebsanordnung 104. Das Fahrrad 100 weist ein Vorderrad 115 und ein Hinterrad 116 auf, wobei das Hinterrad 116 an der Hinterradnabe 118 mittels eines Verbindungselements 117, insbesondere eines Zahnriemens oder einer Kette, und mittels der Antriebsanordnung 104 durch eine Trittkraft des Radfahrers auf die Pedale 108 angetrieben wird. Die Pedale 108 sind dazu mit Kurbeln 119 verbunden, welche wiederum mit jeweils unterschiedlichen Enden der Tretwelle 101 verbunden sind. Die Antriebanordnung 104, insbesondere die Antriebseinheit 20, ist dazu eingerichtet, ein an der Tretwelle 101 wirkendes Fahrerdrehmoment zu unterstützen und an ein Abtriebsritzel 107 zu übertragen, welches in unmittelbarem Eingriff mit dem Verbindungselement 117 zum Antrieb des Fahrrads 100 steht. Das Rahmenbauteil 102 des Fahrzeugs 100 ist umfasst insbesondere ein Sitzrohr 106, ein Unterrohr 111, ein Oberrohr 110, ein Steuerrohr 112, eine Kettenstrebe 105, welche unlöslich miteinander verbunden, beispielsweise miteinander verschweißt sind. Die im Unterrohr 111 integrierte Antriebseinheit 20 ist über ein Kabel mit einem Batteriemodul 109 verbunden und wird durch dieses gespeist.

## Patentansprüche

1. Antriebsanordnung (104) für ein mit Muskelkraft und/oder zusätzlich mit Motorkraft betreibbares Fahrzeug (100), insbesondere Elektrofahrrad, eBike, Pedelec oder S-Pedelec, zur universellen Anbindung an einem Rahmenbauteil (102), umfassend
• eine Antriebseinheit (20),
• eine Anzahl erster Befestigungsvorrichtungen (21) an der Antriebseinheit (20)
• eine Anzahl zweiter Befestigungsvorrichtungen (31) an dem Rahmenbauteil (102), wobei die ersten Befestigungsvorrichtungen (21) an der Antriebseinheit (20) und die zweiten Befestigungsvorrichtungen (31) an dem Rahmenbauteil (102) dazu ausgebildet sind, die Antriebseinheit (20) an dem Rahmenbauteil (102) zu befestigen,
**dadurch gekennzeichnet,**
**dass** die Anzahl erster Befestigungsvorrichtungen (21) der Antriebseinheit (20) größer ist als die Anzahl zweiter Befestigungsvorrichtungen (31) des Rahmenbauteils (102).

2. Antriebsanordnung (104) nach Anspruch 1, **dadurch gekennzeichnet, dass** die Anzahl erster Befestigungsvorrichtungen (21) auf einer Kreisbahn, insbesondere mit einem Radius von 15 mm bis 50 mm, bevorzugt 20 mm bis 40 mm, besonders bevorzugt 31 mm um eine Tretwelle (101) der Antriebseinheit (20) angeordnet ist.

3. Antriebsanordnung (104) nach einem der vorherigen Ansprüche, **dadurch gekennzeichnet, dass** zumindest eine der ersten Befestigungsvorrichtungen (21) der Antriebseinheit (20) auf einer Befestigungsachse (28), welche eine Mittelachse (18) eines Unterrohrs (111) oder eine Parallele der Mittelachse eines Unterrohrs (111) des Rahmenbauteils (102) schneidet, angeordnet ist.

4. Antriebsanordnung (104) nach einem der vorherigen Ansprüche, **dadurch gekennzeichnet, dass** die Anzahl erster Befestigungsvorrichtungen (21) zu gleichen Winkeln, bevorzugt in einem Winkel von 60°, um die Tretwelle (101) der Antriebseinheit (20) angeordnet ist.

5. Antriebsanordnung (104) nach einem der vorherigen Ansprüche, **dadurch gekennzeichnet, dass** zumindest eine der ersten Befestigungsvorrichtungen (21) auf einer Achse, welche im Wesentlichen parallel zu einer Mittelachse (15) der Antriebseinheit (20) ist und eine Mittelachse der Tretwelle (101) schneidet, angeordnet ist.

6. Antriebsanordnung (104) nach einem der vorherigen Ansprüche, **dadurch gekennzeichnet, dass** aktive erste Befestigungsvorrichtungen (21) vorgesehen sind, welche in einem Winkel von im Wesentlichen 120° um die Tretwelle angeordnet sind.

7. Antriebsanordnung (104) nach einem der vorherigen Ansprüche, **dadurch gekennzeichnet, dass** die Antriebseinheit (20) sechs erste Befestigungsvorrichtungen (21) aufweist.

8. Antriebsanordnung (104) nach einem der vorherigen Ansprüche, **dadurch gekennzeichnet, dass** das Rahmenbauteil (102) drei zweite Befestigungsvorrichtungen (31) aufweist.

9. Antriebsanordnung (104) nach Anspruch 7, **dadurch gekennzeichnet, dass** drei passive erste Befestigungsvorrichtungen (21) der Antriebseinheit (20) dazu vorgesehen sind, ein Schutzelement (103) zu befestigen.

10. Antriebsanordnung (104) nach einem der vorherigen Ansprüche, **dadurch gekennzeichnet, dass** die Befestigung der Antriebseinheit (20) am Rahmenbauteil (102) dazu ausgebildet ist, eine Festlagerseite (26) und eine Loslagerseite (27) zu bilden.

11. Antriebseinheit (20), für ein mit Muskelkraft und/oder mit Motorkraft betreibbares Fahrzeug (100), insbesondere Elektrofahrrad, eBike, Pedelec oder S-Pedelec, umfassend einen Motor (25), eine Tretwelle (101), mehrere Befestigungsvorrichtungen (21) und eine Mittelachse der Antriebseinheit (15),
wobei die Befestigungsvorrichtungen (21) dazu ausgebildet sind, die Antriebseinheit (20) an einem Rahmenbauteil (102) zu befestigen, **dadurch gekennzeichnet,**
**dass** sich zumindest eine der Befestigungsvorrichtungen (21) der Antriebseinheit (21) auf der Mittelachse (15) der Antriebseinheit (20) zwischen der Tretwelle (101) und dem Motor (25) der Antriebseinheit (20) befindet.

12. Antriebseinheit (20) nach Anspruch 13, **dadurch gekennzeichnet, dass** sich die Befestigungsvorrichtungen (21) auf einer Kreisbahn, insbesondere mit einem Radius von 15 mm bis 50 mm, bevorzugt 20 mm bis 40 mm, besonders bevorzugt 31 mm, um die Tretwelle (101) angeordnet sind.

13. Antriebseinheit (20) nach einem der Ansprüche 13 oder 14, **dadurch gekennzeichnet, dass** die mehreren Befestigungsvorrichtungen (21) zu gleichen Winkeln, bevorzugt in einem Winkel von 60°, um die Tretwelle (101) angeordnet ist.

14. Antriebseinheit nach einem der Ansprüche 13 bis 15, **dadurch gekennzeichnet, dass** die Antriebseinheit (20) sechs Befestigungsvorrichtungen (21) aufweist.

15. Fahrzeug (100), insbesondere Elektrofahrrad, eBike, Pedelec oder S-Pedelec umfassend eine Antriebsanordnung (104) gemäß einem der Ansprüche 1 bis 10.

16. Fahrzeug (100), insbesondere Elektrofahrrad, eBike, Pedelec oder S-Pedelec umfassend eine Antriebseinheit (20) gemäß einem der Ansprüche 11 bis 14.
